# EUROPÄISCHE PATENTSCHRIFT

(11) **EP 1 069 326 B1**
(45) Veröffentlichungstag und Bekanntmachung des Hinweises auf die Patenterteilung: **20.04.2005**
(21) Anmeldenummer: 00112982.4
(22) Anmeldetag: 21.06.2000
(51) Int. Cl.: F16B 21/07, F16B 21/16

(54) **Halteelement zur lösbaren Befestigung auf einem längsgerippten Kunststoffbolzen**
Element removably fixed to a fluted plastic stud
Elément de fixation amovible sur un goujon cannelé en plastique

(30) Priorität: 14.07.1999 DE 19932862
(43) Veröffentlichungstag der Anmeldung: 17.01.2001
(73) Patentinhaber: A. Raymond & Cie, F-38028 Grenoble-Cédex (FR)
(72) Erfinder: Gombert, Stéphane, 38100 Grenoble (FR)
(74) Vertreter: Rüttgers, Joachim, Dr.

(56) Entgegenhaltungen:
- EP-A- 0 971 135
- GB-A- 2 129 863
- US-A- 3 374 859
- US-A- 4 547 108

## Beschreibung

Die Erfindung bezieht sich auf ein Halteelement gemäß dem Oberbegriff des Patentanspruches 1.

Ein derartiges Halteelement ist aus der GB 2 129 863 A bekannt. Bei dem vorbekannten Halteelement legt sich ein in einen Käfigraum eines Aufnahmekäfigs des Halteelementes hineinragender und mit einer Stützkante ausgebildeter Stützarm an einem in den Käfigraum eingeführten Bolzen an, wobei durch die durch den vorgespannten Stützarm ausgeübte Kraft die Stützkante mit dem Bolzen in Eingriff kommt. Damit ist eine gute Befestigung des Halteelementes an dem Bolzen erzielt, die allerdings nicht ohne weiteres wieder zu lösen ist.

Der Erfindung liegt die Aufgabe zugrunde, ein Halteelement der eingangs genannten Art anzugeben, das sich durch eine verhältnismäßig einfache Lösbarkeit von einem Bolzen auszeichnet.

Diese Aufgabe wird bei einem Halteelement der eingangs genannten Art erfindungsgemäß mit den kennzeichnenden Merkmalen des Patentanspruches 1 gelöst.

Durch das Ausbilden eines Entriegelungssteges an dem Stützarm läßt sich beispielsweise durch Ansetzen eines Schraubendrehers der Eingriff der Stützkante mit den Längsrippen eines in den Aufnahmekäfig eingeführten Bolzens durch Aufbiegen des Stützarmes relativ einfach lösen.

Weitere zweckmäßige Ausgestaltungen von erfindungsgemäßen Halteelementen sind Gegenstand der Unteransprüche.

In der Zeichnung ist ein Ausführungsbeispiel der Erfindung dargestellt und soll nachfolgend näher erläutert werden. Es zeigen:
- Fig.1: einen Schnitt durch ein Ausführungsbeispiel eines erfindungsgemäßen Halteelementes,
- Fig. 2: das Halteelement gemäß Fig. 1 in einer Seitenansicht beim Aufdrücken auf einen gerippten Kunststoffbolzen und
- Fig. 3: die gleiche Befestigungssituation unter Einwirkung einer Zugkraft.

Das in den Figuren dargestellte Halteelement besteht aus einem aus hartelastischem Kunststoff hergestellten Aufnahmekäfig **1** mit einer am Bolzen **5** anlegbaren Innenwand **2** sowie einem Stützarm **3,** der auf der der Innenwand **2** gegenüberliegenden Seite am Aufnahmekäfig **1** elastisch auffederbar angeformt ist. Dieser Stützarm **3** ist entgegen der Aufdrückrichtung **A** unter einem Winkel α auf die gegenüberliegende Innenwand **2** gerichtet, wobei der Abstand der Stützkante **13** zur Innenwand **2** kleiner ist als der Außendurchmesser des Bolzens **5.**

An der unteren Querwand **6** und der oberen Querwand **7** des Käfigs **1** ist jeweils ein Durchgangsloch **8** und **9** zum Ein- bzw. Durchführen des Bolzens **5** vorgesehen. An der unteren Querwand **6** sind ferner nach drei Seiten schräg nach unten abstehende Auflageflügel **10** auffederbar angeformt.

Der zum Aufdrücken des Halteelements vorgesehene Bolzen **5** besteht ebenfalls aus Kunststoff und ist, über seinen Umfang gleichmäßig verteilt, mit achsparallelen Längsrippen **11** versehen. Der Bolzen **5** selbst wird von einer Trägerplatte **12** gehalten, auf welcher der Aufnahmekäfig **1** sich mit den Auflageflügeln **10** nach dem Aufdrücken abstützt.

Der Stützarm **3** ist an seinem freien Ende mit einer spitzwinklig ausgebildeten Stützkante **13** versehen und besitzt außerdem oberhalb davon eine Stütznase **14**. Ferner befindet sich auf der Oberseite des Stützarms **3** ein Entriegelungssteg **15**, welcher, entgegen der Aufdrückrichtung **A**, am Stützarm **3** angeformt ist. Um den Entriegelungssteg **15** leichter mit einem Werkzeug - wie beispielsweise einer Flachzange - betätigen zu können, ist in der oberen Querwand **7** eine zum Einführen der Zange ausreichend große Aussparung **16** eingelassen.

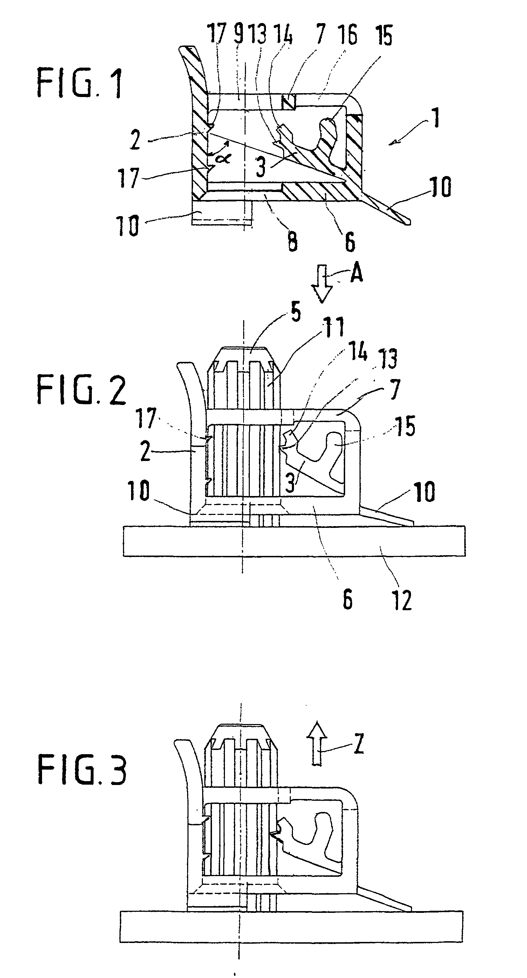

Zur weiteren Verstärkung der Haltekraft sind an der Innenwand **2** unterhalb und oberhalb der Höhe der Stützkante **13** zwei in den Käfigraum **4** hineinwagende spitzwinklig ausgebildete Rippen **17** angeformt, welche sich im aufgedrückten Zustand des Halteelements ebenfalls in die Längsrippen **11** eingraben ( **Fig. 3** ).

Die Funktionsweise des Halteelements ist in den Figuren **2** und **3** anschaulich dargestellt und soll zum besseren Verständnis kurz erläutert werden.

Beim Aufdrücken des Aufnahmekäfigs **1** in Richtung des Pfeiles **A** auf den gerippten Bolzen **5** federt der Stützarm **3** zunächst nach oben auf, wobei die Stützkante **13** leicht über die Längsrippen **11** abwärts gleitet. Das Aufdrücken ist beendet, sobald die Auflageflügel **10** auf der Trägerplatte **11**, wie aus Figur **2** ersichtlich, aufliegen und sich dabei etwas zurückbiegen.

Nun hebt sich der Aufnahmekäfig **1** unter der Federkraft der Auflageflügel **10** leicht in Richtung des Pfeiles **Z** an, wobei die Stützkante **13** sich in die Längsrippen **11** eingräbt, und zwar so weit, bis die Stütznase **14** an den Rippen **11** anliegt. Der Stützarm **3** ist nunmehr fest auf dem Bolzen **5** verankert und kann nur durch Zurückbiegen des Entriegelungssteges **15** wieder vom Bolzen **5** gelöst werden.

## Patentansprüche

1. Halteelement aus hartelastischem Kunststoff zur lösbaren Befestigung auf einem mit achsparallelen Längsrippen versehenen Bolzen (5) aus Kunststoff mit einem Aufnahmekäfig (1), der eine Innenwand (2) sowie einen Stützarm (3) aufweist, welcher auf der gegenüberliegenden Seite der Innenwand (2) am Aufnahmekäfig (1) auffederbar angeformt und von einem Durchgangsloch (8) zum Einführen des Bolzens (5) in einen Käfigraum (4) des Aufnahmekäfigs (1) wegweisend unter einem dem Durchgangsloch zugewandten Winkel (α) kleiner 90° auf die Innenwand (2) gerichtet ist, wobei der Stützarm (3) an seinem freien Ende mit einer spitzwinklig ausgebildeten, zum Eingriff mit dem Bolzen (5) eingerichteten Stützkante (13) versehen ist, die sich im montierten Zustand in die Längsrippen eingräbt **dadurch gekennzeichnet, daß** auf der von dem Durchgangsloch (8) wegweisenden Seite des Stützarms (3) ein Entriegelungssteg (15) angeformt ist

2. Halteelement nach Anspruch 1, **dadurch gekennzeichnet, daß** auf der von dem Durchgangsloch (8) abgewandten Seite der Stützkante (13) eine sich bei einem eingeführten Bolzen (5) an die Längsrippen ( 11 ) anlegende Stütznase (14) vorgesehen ist.

3. Halteelement nach Anspruch 1 oder 2, **dadurch gekennzeichnet, daß** an der Innenwand (2) mindestens eine in den Käfigraum (4) gerichtete und quer zu der Längsrichtung des Aufnahmekäfigs (1), d.h. quer zur Einführrichtung des Bolzens in den Aufnahmekäfig, ausgerichtete spitzwinklige Rippe (17) angeformt ist.

4. Halteelement nach einem der Ansprüche 1 bis 3, **dadurch gekennzeichnet, daß** an einer das Durchgangsloch (8) aufnehmenden Querwand (6) des Aufnahmekäfigs (1) nach mindestens drei Seiten des Aufnahmekäfigs schräg von dem Käfigraum (4) wegweisend abstehende Auflageflügel (10) auffederbar angeformt sind.

## Claims

1. Holding element made of hard elastic plastics for releasable fixing on a plastics bolt (5) with longitudinal ribs parallel to its axis, having an accommodating cage (1) with an internal wall (2) and a support arm (3) which is able to bend up elastically and is formed on the opposing side of the internal wall (2) on the accommodating cage (1) and is directed, pointing away from a through hole (8) for introducing the bolt (5) into a cage space (4) of the accommodating cage (1), at an angle (α) of less than 90° facing towards the through hole, whereby the support arm (3) is provided on its free end with a support edge (13) formed at an acute angle for engaging with the bolt (5) and which buries itself in the assembled condition into the longitudinal ribs, **characterised in that** on the side of the support arm (3) facing away from the through hole (8), an unlocking web (15) is formed.

2. Holding element according to claim 1, **characterised in that** a support nose (14) which rests, with a bolt (5) inserted, against the longitudinal ribs (11) is provided on the side of the support edge (13) facing away from the through hole (8).

3. Holding element according to claim 1 or 2, **characterised in that** formed on the internal wall (2) is at least one acutely angled rib (17) directed into the cage space (4) and oriented transverse to the longitudinal direction of the accommodating cage (1), that is, transverse to the introduction direction of the bolt into the accommodating cage.

4. Holding element according to one of the claims 1 to 3, **characterised in that** formed on a transverse wall (6) of the accommodating cage (1) accommodating the through hole (8), on at least three sides of the accommodating cage are support wings (10) extending outwardly and pointing obliquely away from the cage space (4) and able to bend up elastically.

## Revendications

1. Organe de retenue en matière plastique à cédage élastique dur pour fixation, avec possibilité de démontage ultérieur, sur un goujon en matière plastique (5) muni de nervures longitudinales parallèles à l'axe, se composant d'une cage d'emmanchement (1), qui comporte une paroi intérieure (2) ainsi qu'une patte d'appui (3), qui est réalisée solidaire par moulage du côté diamétralement opposé de la paroi intérieure (2) de la cage d'emmanchement (1), avec la possibilité de céder par déformation élastique et qui est orientée vers l'extérieur, par rapport à un orifice de passage traversant (8) pour l'introduction du goujon (5) dans le gabarit d'emprise (4) de la cage d'emmanchement (1), en formant un angle (a) inférieur à 90° s'ouvrant vers l'orifice de passage traversant, en direction de la paroi intérieure (2), la patte d'appui (3) comportant en l'occurrence, au niveau de son extrémité libre, une arête d'appui (13) ayant une configuration en angle aigu agencée pour venir en prise d'engagement avec le goujon (5) et qui, lorsque l'organe de retenue est monté en position, vient s'encastrer dans ses nervures longitudinales, **caractérisé en ce qu'**une barrette de déverrouillage (15) est réalisée solidaire par moulage de la partie de la patte d'appui (3) qui va en s'écartant de l'orifice de passage traversant (8).

2. Organe de retenue selon la revendication 1, **caractérisé en ce qu'**il est prévu, sur la partie de l'arête d'appui (13) opposée à l'orifice de passage traversant (8) un ergot d'appui (14) qui vient s'appliquer contre les nervures longitudinales (11) lorsque l'organe de retenue est emmanché sur le goujon (5).

3. Organe de retenue selon la revendication 1 ou 2, **caractérisé en ce qu'**au moins une nervure formant un angle aigu, faisant saillie à l'intérieur du gabarit d'emprise (4) de la cage et orientée transversalement par rapport à l'axe longitudinal de la cage d'emmanchement (1), c'est-à-dire transversalement par rapport au sens de l'introduction du goujon dans la cage d'emmanchement, est réalisée solidaire par moulage de la paroi intérieure (2).

4. Organe de retenue selon l'une des revendications 1 à 3, **caractérisé en ce que** des ailettes d'appui (10), faisant saillie vers l'extérieur, suivant une disposition oblique, vers au moins trois côtés de la cage d'emmanchement, depuis le gabarit d'emprise (4) de la cage et capables de céder par déformation élastique, sont réalisées solidaires par moulage d'une paroi transversale (6), délimitant l'orifice de passage traversant (8), de la cage d'emmanchement (1).
